# EUROPÄISCHE PATENTSCHRIFT

(11) **EP 0 763 190 B1**
(45) Veröffentlichungstag und Bekanntmachung des Hinweises auf die Patenterteilung: **27.07.2005**
(21) Anmeldenummer: 96914878.2
(22) Anmeldetag: 03.04.1996
(51) Int. Cl.: G01F 1/684

(54) **WÄRMEÜBERGANGSKONTROLL- UND/ODER -MESSGERÄT**
HEAT TRANSMISSION MONITORING AND/OR MEASURING APPARATUS
APPAREIL DE CONTROLE ET/OU DE MESURE DE TRANSFERT DE CHALEUR

(30) Priorität: 03.04.1995 DE 19512111
(43) Veröffentlichungstag der Anmeldung: 19.03.1997
(73) Patentinhaber: i f m electronic gmbh, D-45127 Essen (DE)
(72) Erfinder: BUHL, Peter, D-88250 Weingarten (DE); REICHART, Walter, D-88273 Fronreute (DE); GEIGER, Clemens, D-89361 Landensberg (DE)
(74) Vertreter: Gesthuysen, von Rohr & Eggert
(86) Internationale Anmeldenummer: PCT/EP1996/001467
(87) Internationale Veröffentlichungsnummer: WO 1996/031759

(56) Entgegenhaltungen:
- EP-A- 0 590 449
- DE-A- 3 222 046
- FR-A- 2 411 392
- GB-A- 1 219 710
- GB-A- 2 272 296
- US-A- 4 850 717
- MESSEN PRUFEN AUTOMATISIEREN INTERNATIONALES FACHJOURNAL FUR MESS-, STEUER- UND REGELTECHNIK, Bd. 29, Nr. 1/2, März 1993, BAD WORISHOFEN DE, Seiten 4-7, XP000428256 R.LAUER: "Moderne Stroemungssensoren nach einem kalorimetrischen Prinzip"
- ADVANCES IN INSTRUMENTATION AND CONTROL, Bd. 48, Nr. PART 03, 1.Januar 1993, RESEARCH TRIANGLE PARK, NC, US, Seiten 1637-1654, XP000428428 OLIN J G: "A THERMAL MASS FLOW MONITOR FOR CONTINUOUS EMISSIONS MONITORING SYSTEMS (CEMS)"

## Beschreibung

Die Erfindung betrifft ein Wärmeübergangskontroll- und/oder -meßgerät, insbesondere einen Strömungswächter und/oder ein Strömungsmeßgerät, für strömende Medien, mit einem Gehäuse, einem Heizelement und mindestens einem Temperaturmeßelement gemäß dem Oberbegriff des Patentanspruchs 1.

Eingangs ist gesagt worden, daß die Erfindung ein Wärmeübergangskontrollgerät und/oder ein Wärmeübergangsmeßgerät betrifft. Wärmeübergangskontrollgerät steht dabei für eine Ausführungs form, bei der ein Wärmeübergang lediglich kontrolliert wird, bei der also lediglich das Vorhandensein oder Nicht-Vorhandensein eines bestimmten Wärmeübergangs festgestellt wird. Demgegenüber steht Wärmeübergangsmeßgerät für eine Ausführungsform, bei der ein Wärmeübergang gemessen wird; es wird also ein dem Wärmeübergang entsprechender analoger Meßwert gewonnen, der auch in einen digitalisierten Meßwert umgesetzt werden kann. Anders ausgedrückt liefert ein Wärmeübergangskontrollgerät eine qualitative Aussage "Wärmeübergang vorhanden" oder "Wärmeübergang nicht vorhanden", während ein Wärmeübergangsmeßgerät eine quantitative Aussage in bezug auf den Wärmeübergang macht.

Wärmeübergangskontrollgeräte bzw. Wärmeübergangsmeßgeräte der hier in Rede stehenden und zuvor differenziert angesprochenen Art werden insbesondere zur Erfassung des Wärmetransports durch strömende Medien eingesetzt. Man spricht dann von Strömungswächtern bzw. von Strömungsmeßgeräten, - wobei im Sinne der zuvor gegebenen Differenzierung Strömungswächter den Wärmeübergangskontrollgeräten und Strömungsmeßgeräte den Wärmeübergangsmeßgeräten entsprechen.

Wärmeübergangskontrollgeräte bzw. Wärmeübergangsmeßgeräte sowie Strömungswächter bzw. Strömungsmeßgeräte der hier in Rede stehenden Art arbeiten nach dem kalorimetrischen Prinzip. Im allgemeinen arbeitet man mit einer Differenztemperaturmessung. Ein erstes Temperaturmeßelement mißt die eigentliche Meßtemperatur, wobei sich die Meßtemperatur aus der Heizleistung des Heizelements, der Temperatur des strömenden Mediums und der strömungsabhängigen Wärmetransportkapazität des strömenden Mediums ergibt. Weiter mißt im allgemeinen ein zweites Temperaturmeßelement eine Referenztemperatur. Für die Lehre der Erfindung ist die Messung der Referenztemperatur nicht zwingend erforderlich; sie kann beispielsweise entfallen, wenn die Temperatur des strömenden Mediums bekannt ist.

Einleitend ist gesagt, daß zum Gegenstand der Erfindung ein Heizelement und mindestens ein Temperaturmeßelement gehören. Dabei kann das Heizelement auch die Funktion des zuvor erläuterten zweiten Temperaturmeßelements übernehmen; es handelt sich dann um ein Heiz- und Temperaturmeßelement.

Im Stand der Technik sind nach dem kalorimetrischen Prinzip arbeitende Wärmeübergangskontroll- und/oder Meßgeräte, insbesondere auch Strömungswächter bzw. Strömungsmeßgeräte, vielfach bekannt (vgl. die deutschen Offenlegungsschriften 24 47 617, 26 29 051, 32 13 902, 32 22 046, 37 13 981, 38 11 728, 38 25 059, 39 11 008 und 39 43 437, ferner die noch nicht veröffentlichte Patentanmeldung 195 04 496.7). Allen bekannten Ausführungsformen ist gemeinsam, daß sie nur eine relativ niedrige Empfindlichkeit und eine relativ niedrige Reaktionsgeschwindigkeit haben; Reaktionsgeschwindigkeit meint dabei die Fähigkeit, bei schnellen Änderungen der Temperatur und/oder der Strömungsgeschwindigkeit des Mediums relativ schnell zu reagieren und relativ genaue Meßwerte zu liefern.

Aus dem Artikel "Moderne Strömungssensoren nach einem kalorimetrischen Prinzip", Reinhard Lauer, Messen & Prüfen Automatisieren, Internationales Fachjournal für Mess-, Steuer- und Regeltechnik, Bd. 29, Nr.1/2, März 1993, Bad Wörishofen, Seiten 4 - 7, XP000428256, ist ein Strömungssensor bekannt, der zwei stiftförnüge Fühlerelemente aufweist, wobei diese beiden Fühlerelemente beim Einbau des Strömungssensors in das strömende Medium hinein ragen.

Der Erfindung liegt die Aufgabe zugrunde, ein Wärmeübergangskontroll- und/oder-meßgerät, insbesondere einen Strömungswächter und/oder ein Strömungsmeßgerät mit einer relativ hohen Empfindlichkeit und einer relativ hohen Reaktionsgeschwindigkeit anzugeben.

Diese Aufgabe ist durch ein erfindungsgemäßes Wärmeübergangskontroll- und/oder-meßgerät mit den Merkmalen des Patentanspruchs 1 gelöst.

Zu dem erfindungsgemäßen Wärmeübergangskontroll- und/oder -meßgerät gehört, wie eingangs ausgeführt, ein Gehäuse. In diesem Gehäuse befinden sich das Heizelement, das Temperaturmeßelement bzw. die Temperaturmeßelemente und zu einer Schaltungsanordnung miteinander verbundene elektrische und/oder elektronische Bauelemente und Bauteile. In das Gehäuse eingebaut sein können auch Bedien- und/oder Anzeigeelemente. Schließlich kann das Gehäuse noch mit einem Anschlußstecker versehen sein; alternativ zu einem Anschlußstecker kann aus dem Gehäuse eine Anschlußkabel herausgeführt sein.

Die Zuordnung des Heizelements und des Temperaturmeßelements bzw. der Temperaturmeßelemente zum Gehäuse bzw. zum strömenden Medium kann unterschiedlich realisiert sein.

Bezüglich der Zuordnung des Heizelements und des Temperaturmeßelements bzw. der Temperaturmeßelemente zum Gehäuse und zum strömenden Medium ist nun das erfindungsgemäße Wärmeübergangskontroll- und/oder -meßgerät dadurch gekennzeichnet, daß das Heizelement und das Temperaturmeßelement bzw. die Temperaturmeßelemente in ein mit dem strömenden Medium in Berührung kommendes Sensorteil des Gehäuses integriert sind. Dabei kann das mit dem strömenden Medium in Berührung kommende Sensorteil des Gehäuses kegelstumpfförmig ausgeführt sein. Vorteilhafter ist jedoch eine Ausführungsform, bei der das mit dem strömenden Medium in Berührung kommende Sensorteil des Gehäuses einen stufenartigen Absatz, vorzugsweise von etwa 0,2 bis 1 mm, insbesondere von etwa 0,5 mm, aufweist. Ein solcher stufenartiger Absatz führt zu einer gewissen Verwirbelung des strömenden Mediums, was sich positiv auf die Kennlinie des Wärmeübergangskontroll- und/oder-meßgeräts auswirkt. Kennlinie meint dabei die Abhängigkeit des Ausgangssignals von der Geschwindigkeit des strömenden Mediums.

Eine bezüglich der Zuordnung des Heizelements und des Temperaturmeßelements bzw. der Temperaturmeßelemente zum Gehäuse und zum strömenden Medium andere als die zuvor beschriebene Ausführungsform ist dadurch gekennzeichnet, daß das Heizelement und das Temperaturmeßelement bzw. die Temperaturmeßelemente in die Rohrwand eines das strömende Medium führenden Rohres eingesetzt sind. Während also bei der erfindungsgemäßen Ausführungsform das Heizelement und das Temperaturmeßelement bzw. die Temperaturmeßelemente mechanisch mit dem Gehäuse, nämlich mit dem mit dem strömenden Medium in Berührung kommenden Sensorteil des Gehäuses, verbunden sind, gilt für die zuletzt beschriebene Ausführungsform, die nicht Teil der Erfindung ist, daß das Heizelement und das Temperaturmeßelement bzw. die Temperaturmeßelemente mechanisch mit dem das strömende Medium führenden Rohr verbunden sind.

Wenn zuvor gesagt worden ist, daß erfindungsgemäß das Heizelement und das Temperaturmeßelement stiftförmig ausgeführt sind, so reicht es aus, wenn das Heizelement und/oder das Temperaturmeßelement nur teilweise stiftförmig ausgeführt sind bzw. ist, nämlich jeweils nur der Teil, der im Sensorteil des Gehäuses integriert, stiftförmig ausgeführt ist. Vorzugsweise gilt dabei, daß das Heizelement und/oder das Temperaturmeßelement insoweit, als eine stiftförmige Ausführung nicht verwirklicht ist, flachförmig ausgeführt sind bzw. ist. Insgesamt ist die beschriebene Ausführung des Heizelements und des Temperaturmeßelements besonders massearm, was wesentlich für die erfindungsgemäß erreichte relativ hohe Empfindlichkeit und relativ hohe Reaktionsgeschwindigkeit ist.

Bei der Ausführungsform des erfindungsgemäßen Wärmeübergangskontroll- und/oder -meßgeräts, bei der das Heizelement und das Temperaturmeßelement bzw. die Temperaturmeßelemente in ein mit dem strömenden Medium in Berührung kommendes Sensorteils des Gehäuses integriert sind, hat das Gehäuse zumindest teilweise vorzugsweise die Form eines Kreiszylinders. Dabei ist dann das mit dem strömenden Medium in Berührung kommende Sensorteil die Stirnfläche des Gehäuses, die, wie bereits ausgeführt, kegelstumpfförmig ausgeführt sein kann, vorzugsweise jedoch einen stufenartigen Absatz aufweist. In die als Sensorteil wirkende, in der zuvor beschriebenen Weise ausgeführte Stirnfläche des Gehäuses sind dann das Heizelement und das Temperaturmeßelement bzw. die Temperaturmeßelemente integriert. Integriert meint dabei, daß das Heizelement und das Temperaturmeßelement bzw. die Temperaturmeßelemente vom Inneren des Gehäuses her in das Sensorteil des Gehäuses hineinragen. Genaugenommen sind also das Heizelement und das Temperaturmeßelement bzw. die Temperaturmeßelemente nur teilweise in das Sensorteil des Gehäuses integriert.

Für die angestrebte relativ hohe Empfindlichkeit und relativ hohe Reaktionsgeschwindigkeit des erfindungsgemäßen Wärmeübergangskontroll- und/oder -meßgeräts ist wesentlich das Zusammenwirken des stiftförmigen Heizelements und des stiftförmigen Temperaturmeßelements einerseits mit dem strömenden Medium andererseits. Der Detailausbildung im Bereich der dem strömenden Medium nahen Enden von Heizelement und Temperaturmeßelement kommt deshalb besondere Bedeutung zu.

Bei dem erfindungsgemäßen Wärmeübergangskontroll- und/oder -meßgerät können das Heizelement und das Temperaturmeßelement außen-bündig in das Sensorteil des Gehäuses eingesetzt sein. Es besteht aber auch die Möglichkeit, das Heizelement und das Temperaturmeßelement geringfügig, vorzugsweise um etwa 1 bis 2 mm, rückversetzt in das Sensorteil des Gehäuses einzusetzen und das in dem Sensorteil des Gehäuses freibleibende Volumen mit Lot, vorzugsweise mit Weichlot, z. B. mit Silberlot, auszufüllen. Ein dann über das Sensorteil des Gehäuses überstehender Teil des Lots muß dann abgetragen werden. Schließlich besteht aber auch die Möglichkeit, das Heizelement und das Temperaturmeßelement bzw. die Temperaturmeßelemente etwa 0,05 bis 1,0 mm, insbesondere etwa 0,1 bis 0,4mm, in das strömende Medium hineinragen zu lassen. Diese Ausführungsform ist in der Regel besonders vorteilhaft.

Weitere Merkmale und Vorteile der vorliegenden Erfindung ergeben sich aus den dem Patentanspruch 1 nachgeordneten Patentansprüchen sowie der nachfolgenden Beschreibung eines Ausführungsbeispiels anhand der Zeichnung selbst. Dabei bilden alle beschriebenen und alle dargestellten Merkmale für sich und in beliebiger Kombination den Gegenstand der Erfindung, unabhängig von ihrer Zusammenfassung in den Patentansprüchen oder in deren Rückbeziehung. Es zeigt
- Fig. 1: schematisch, eine bevorzugte Ausführungsform eines erfindungsgemäßen Wärmeübergangskontroll- und/oder -meßgeräts, teilweise im Schnitt,
- Fig. 2: den Ausschnitt A aus dem Gegenstand nach Fig. 1, in größerem Maßstab,
- Fig. 3: eine andere als in Fig. 1 dargestellte Ausführungsform des Sensorteils des Gehäuses eines erfindungsgemäßen Wärmeübergangskontroll- und/oder -meßgeräts.
- Fig. 4: eine Draufsicht auf den Gegenstand nach Fig. 3,
- Fig. 5: eine Seitenansicht einer bevorzugten Ausführungsform eines Heizelements bzw. eines Temperaturmeßelements eines erfindungsgemäßen Wärmeübergangskontroll- und/oder -meßgeräts,
- Fig. 6: den Gegenstand nach Fig. 5 in einer um 90° versetzten Seitenansicht und
- Fig. 7: einen Ausschnitt im Bereich des Sensorteils des Gehäuses eines erfindungsgemäßen Wärmeübergangskontroll- und/oder -meßgeräts.

Das dargestellte Wärmeübergangskontroll- und/oder -meßgerät ist ein Strömungsmeßgerät für strömende Medien. Zu diesem Strömungsmeßgerät gehören funktionsnotwendig ein Gehäuse 1, ein Heizelement 2 und ein Temperaturmeßelement 3. Das Heizelement 3 ist, worauf es im Rahmen der Erfindung nicht ankommt, ein Heiz- und Temperaturmeßelement, so daß die eingangs beschriebene Differenztemperaturmessung durchgeführt werden kann. Nicht dargestellt sind die zu dem erfindungsgemäßen Strömungsmeßgerät gehörenden, innerhalb des Gehäuses 1 vorgesehenen elektrischen und elektronischen Bauelemente.

Das Heizelement 2 und das Temperaturmeßelement 3 sind dabei stiftförmig ausgeführt. Bezüglich der Zuordnung des Heizelements 2 und des Temperaturmeßelements 3 zum Gehäuse 1 und zum strömenden Medium zeigen die Figuren unterschiedliche Ausführungsformen.

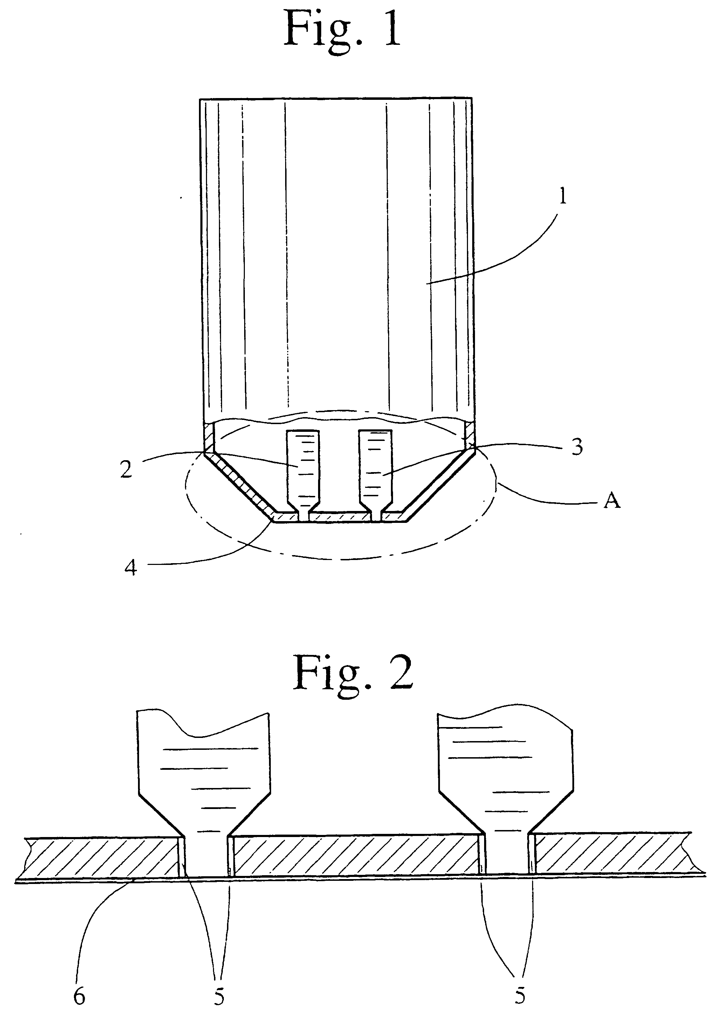

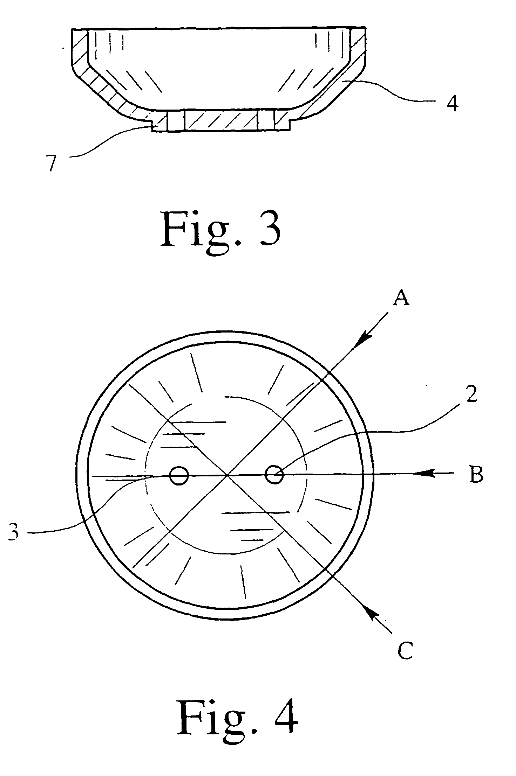

Für alle Ausführungsformen gilt, daß das Heizelement 2 und das Temperaturmeßelement 3 in ein mit dem strömenden Medium in Berührung kommendes Sensorteil 4 des Gehäuses 1 integriert sind. Dabei kann das mit dem strömenden Medium in Berührung kommende Sensorteil 4 des Gehäuses 1, wie dies Fig. 1 zeigt, kegelstumpfförmig ausgerührt sein. Vorteilhafter ist jedoch eine Ausführungsform, bei der das mit dem strömenden Medium in Berührung kommende Sensorteil 4 des Gehäuses 1 einen stufenartigen Absatz 7, wie in Fig. 3 dargestellt, aufweist. Ein solcher stufenartiger Absatz 7, vorzugsweise von etwa 0,2 bis 1 mm, führt zu einer gewissen Verwirbelung des strömenden Mediums, was sich positiv auf die Kennlinie des erfindungsgemäßen Strömungsmeßgeräts auswirkt. Die Fig. 3 zeigt praktisch eine Mischform von kegelstumpfförmiger Ausbildung und Realisierung eines stufenförmigen Absatzes 7. Statt dieser Mischform kann der stufenartige Absatz 7 auch in einen ansonsten eben ausgeführten Sensorteil 4 des Gehäuses 1 realisiert sein.

Im übrigen zeigen die Figuren Ausführungsformen von erfindungsgemäßen Strömungsmeßgeräten, bei denen das Heizelement 2 und das Temperaturmeßelement 3 nur teilweise stiftförmig ausgeführt sind; stiftförmig ausgeführt ist nämlich jeweils nur der Teil, der im Sensorteil 4 des Gehäuses 1 integriert ist. Insoweit, als eine stiftförmige Ausführung nicht verwirklicht ist, sind das Heizelement 2 und das Temperaturmeßelement 3 flachförmig ausgeführt. Insgesamt ist die zuvor beschriebene Ausführung des Heizelements 2 und des Temperaturmeßelements 3 besonders massearm; das ist wesentlich für die erfindungsgemäß erreichte relativ hohe Empfindlichkeit und relativ hohe Reaktionsgeschwindigkeit.

Wie die Fig. 1 zeigt, hat bei der dargestellten Ausführungsform eines erfindungsgemäßen Strömungsmeßgeräts das Gehäuse 1 die Form eines Kreiszylinders. Dabei ist das mit dem strömenden Medium in Berührung kommende Sensorteil 4 die - kegelstumpfförmig ausgebildete - Stirnfläche des Gehäuses 1. In die als Sensorteil 4 wirkende Stirnfläche des Gehäuses 1 sind also das Heizelement 2 und das Temperaturmeßelement 3 integriert. Dabei meint integriert, daß das Heizelement 2 und das Temperaturmeßelement 3 vom Inneren des Gehäuses 1 her in das Sensorteil 4 des Gehäuses 1 hineinragen; in Strenge sind also das Heizelement 2 und das Temperaturmeßelement 3 nur teilweise in das Sensorteil 4 des Gehäuses 1 integriert.

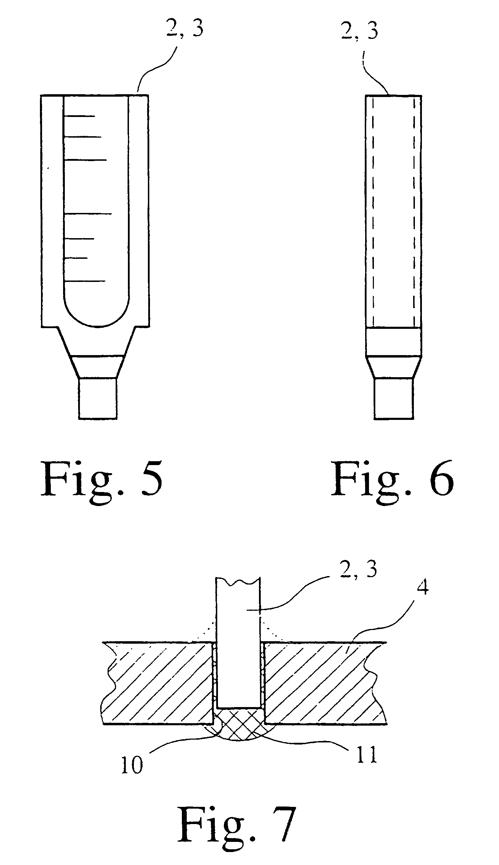

Bei der Ausführungsform des erfindungsgemäßen Strömungsmeßgeräts, das die Fig. 1 und 2 zeigen, sind das Heizelement 2 und das Temperaturmeßelement 3 so in das Sensorteil 4 des Gehäuses 1 eingesetzt, daß das Heizelement 2 und das Temperaturmeßelement 3 außen-bündig mit dem Sensorteil 4 des Gehäuses 1 abschließen. eine von der Ausführungsform nach den Fig. 1 und 2 abweichende Ausführungsform des erfindungsgemäßen Strömungsmeßgeräts ist in Fig. 7 angedeutet. Bei dieser Ausführungsform sind das Heizelement 2 und das Temperaturmeßelement 3 geringfügig, vorzugsweise um etwa 1 bis 2 mm, rückversetzt in das Sensorteil 4 des Gehäuses 1 eingesetzt und ist das in dem Sensorteil 4 des Gehäuses 1 freibleibende Volumen 10 mit Lot 11, vorzugsweise mit Weichlot, z. B. mit Silberlot, ausgefüllt. Dabei zeigt Fig. 7, daß ein Teil des Lots 11 über das Sensorteil 4 des Gehäuses 1 übersteht; dieser Teil des Lots 11 muß noch abgetragen werden.

Die Fig. 5 und 6 zeigen, daß bei erfindungsgemäßen Strömungsmeßgeräten das Heizelement 2 und das Temperaturmeßelement 3 im Bereich der stiftförmigen Ausführung einen kreisförmigen Querschnitt aufweisen können. Im Bereich der stiftförmigen Ausführung von Heizelement 2 und Temperaturmeßelement 3 beträgt der Durchmesser etwa 0,5 bis 1,5 mm, vorzugsweise ca. 0,8 mm. Optimale Werte für den hier in Rede stehenden Durchmesser findet man durch empirische Untersuchungen; der optimale Durchmesser ist vor allem abhängig von der Wärmeleitfähigkeit des strömenden Mediums.

Das erfindungsgemäß angestrebte Ziel einer relativ hohen Empfindlichkeit und einer relativ hohen Reaktionsgeschwindigkeit wird besonders gut dann erreicht, wenn das Heizelement 2 und das Temperaturmeßelement 3 aus gut wärmeleitendem Material bestehen, z. B. aus Kupfer, aus Silber oder aus einem gut wärmeleitendem keramischen Material. Im Gegensatz dazu besteht das Sensorteil 4 des Gehäuses 1, das vorzugsweise eine Stärke von ca. 0,2 bis 1,0 mm, insbesondere von ca. 0,5 mm hat, aus schlecht wärmeleitendem Material, z. B. aus Kunststoff, aus Keramik oder aus schlecht wärmeleitendem Metall, wie z. B. V4A-StahJ.

Generell ist eine gute Wärmeleitung von Heizelement 2 und Temperaturmeßelement 3 und eine schlechte Wärmeleitung des Sensorteils 4 des Gehäuses 1 angestrebt. Insbesondere in bezug auf das Gehäuse 1 bzw. das Sensorteil 4 des Gehäuses 1 läßt es sich nicht immer durchhalten, hier ein schlecht wärmeleitendes Material zu verwenden; aus Gründen mechanischer und/oder korrosiver Festigkeit kann es z. B. erforderlich sein, für das Gehäuse 1 und damit auch für das Sensorteil 4 des Gehäuses 1 V4A-Stahl zu verwenden, - ein Material, das zwar nicht besonders gut wärmeleitend ist, von dem man aber auch nicht sagen kann, daß es besonders schlecht wärmeleitend ist. Um nun gleichwohl gute Meßergebnisse zu erzielen, empfiehlt es sich, das Heizelement 2 und das Temperaturmeßelement 3 mit einem radialem Abstand zum Sensorteil 4 des Gehäuses 1 in das Sensorteil 4 des Gehäuses 1 einzusetzen. Dabei wird man dann den Zwischenraum 5 zwischen dem Heizelement 2 bzw. dem Temperaturmeßelement 3 einerseits und dem Sensorteil 4 des Gehäuses 1 andererseits mit einem schlecht wärmeleitenden Material versehen, z. B. mit Glaslot. Damit ist dann zugleich auch realisiert, daß das Heizelement 2 und das Temperaturmeßelement 3 druckfest und druckdicht in das Sensorteil 4 des Gehäuses 1 eingesetzt sind.

Grundsätzlich könnten das Heizelement 2 und das Temperaturmeßelement 3 direkt dem strömenden Medium ausgesetzt sein. Aus verschiedenen Gründen kann es jedoch vorteilhaft sein, die dem strömenden Medium zugewandten Stirnflächen des Heizelements 2 und des Temperaturmeßelements 3 mit einer Deckschicht 6 zu versehen. Auch die dem strömenden Medium zugewandte Seite des Sensorteils 4 des Gehäuses 1 kann mit einer Deckschicht 6 versehen sein. Sollen nun sowohl das Heizelement 2 und das Temperaturmeßelement 3 als auch das Sensorteil 4 des Gehäuses 1 mit einer Deckschicht 6 versehen sein, so empfiehlt es sich, diese Deckschicht 6 im montierten Zustand aufzubringen, also wenn das Heizelement 2 und das Temperaturmeßelement 3 mit ihren stiftartigen Enden in das Sensorteil 4 des Gehäuses 1 eingefiihrt und ferner der Zwischenraum 5 zwischen dem Heizelement 2 bzw. dem Temperaturmeßelement 3 einerseits und dem Sensorteil 4 des Gehäuses andererseits in der weiter oben beschriebenen Weise gefüllt ist, z. B. mit Glaslot.

Die zuvor angesprochene Deckschicht 6 kann unterschiedlich ausgeführt sein und aufgebracht werden, beispielsweise als galvanisch aufgebrachte Nickelschicht mit einer Stärke von etwa 0,01 mm, als chemisch-reduktiv aufgebrachte Nickelschicht mit einer Stärke von etwa 0,005 mm, als galvanisch oder chemisch-reduktiv aufgebrachte Nickel-Phosphorschicht, insbesondere mit etwa 13 % Phosphor und vorzugsweise mit einer Stärke von etwa 0,005 mm, als galvanisch oder chemisch-reduktiv aufgebrachte Kupfer-Zinn-Zinkschicht, insbesondere mit 55 % Kupfer, 25 % Zinn und 20 % Zink und vorzugsweise mit einer Stärke von etwa 0,001 mm, oder als glasähnliche Siliziumoxidkarbidschicht, vorzugsweise mit einer Stärke von 0,01 bis 0,02 mm.

Wenn bisher als zu dem erfindungsgemäßen Strömungsmeßgerät gehörend das Heizelement 2 angesprochen worden ist, so ist damit das Element gemeint, das, angeordnet im Sensorteil 4 des Gehäuses 1, die Heizleistung in das strömende Medium einbringt. Zu dem eigentlichen Heizelement 2 gehört natürlich noch ein - in den Figuren nicht dargestellter - Heizwiderstand, der vorzugsweise, was in den Figuren natürlich auch nicht dargestellt ist, über einen Leiterfilm thermisch mit dem Heizelement 2 gekoppelt ist.

Zuvor ist ausgerührt worden, daß bei der Ausführungsfonn nach Fig. 1 das Gehäuse 1 des erfindungsgemäßen Strömungsmeßgeräts die Form eines Kreiszylinders hat. Das ist natürlich nicht zwingend. Insbesondere sind auch denkbar Ausfiihrungsformen, bei denen das Gehäuse abgestuft ist, also einen Sensorteil mit einem geringeren Durchmesser und einen Bauelementeteil mit einem größeren Durchmesser aufweist.

In Fig. 4 sind mögliche Strömungsrichtungen A, B, C des strömenden Mediums relativ zum Heizelement 2 und zum Temperaturmeßelement 3 dargestellt. Vorzugsweise ist das erfindungsgemäße Strömungsmeßgerät so einzubauen, daß die Strömungsrichtung A oder die Strömungsrichtung C vorliegt.; die Strömungsrichtung B ist weniger günstig.

Weiter oben ist bereits ausgerührt worden, daß eine gute Wärmeleitung von Heizelement 2 und Temperaturmeßelement 3 angestrebt ist. Auch ist gesagt, das Sensorteil 4 des Gehäuses 1 aus schlecht wärmeleitendem Material bestehen soll. Das das Heizelement 2 und das Temperaturmeßelement 3 umgebende Material soll also das Heizelement 2 und das Temperaturmeßelement 3 thermisch möglichst wenig beeinflussen.

## Patentansprüche

1. Wärmeübergangskontroll- und/oder -meßgerät, insbesondere Strömungswächter und/oder -meßgerät, für strömende Medien, mit einem Gehäuse (1), einem Heizelement (2) und mindestens einem Temperaturmeßelement (3), wobei das Heizelement (2) und das Temperaturmeßelement (3) in ein mit dem strömenden Medium in Berührung kommendes Sensorteil (4) des Gehäuses (1) integriert sind, d. h. daß das Heizelement (2) und das mindestens eine Temperaturmeßelement (3) in das Sensorteil (4) des Gehäuses (1) hineinragen, und die Teile, die im Sensorteil (4) des Gehäuses (1) integriert sind, stiftförmig ausgeführt sind,
**dadurch gekennzeichnet,**
**daß** das Heizelement (2) und das Temperaturmeßelement (3) außen-bündig in das Sensorteil (4) des Gehäuses (1) eingesetzt sind geringfügig rückversetzt ist in das Sensorteil (4) des gehaüses (1) eingesetzt sind oder geringfügig in das strömende Medium hineinragen, daß das Heizelement (2) und das Temperaturmeßelement (3), im stiftförmigen Bereich einen Durchmesser von 0,5 bis 1,5 mm aufweisen und mit radialem Abstand zum Sensorteil (4) des Gehäuses (1) in das Sensorteil (4) eingesetzt sind, so daß ein Zwischenraum (5) zwischen dem stiftförmigen Bereich des Heizelements (2) und dem stiftförmigen Bereich des Temperaturmeßelements (3) einerseits und dem Sensorteil (4) des gehäuses (1) anderseits realisiert ist, wobei der Zwischenraum (5) mit einem Schlecht wärmeleitenden Material versehen ist.

2. Wärmeübergangskontroll- und/oder -meßgerät nach Anspruch 1, **dadurch gekennzeichnet, daß** das Heizelement (2) und/oder das Temperaturmeßelement (3) nur teilweise stiftförmig ausgeführt sind, nämlich jeweils nur der Teil, der im Sensorteil (4) des Gehäuses (1) integriert ist, stiftförmig ausgeführt ist und ausonsten flachförmig ausgeführt sind.

3. Wärmeübergangskontroll- und/oder -meßgerät nach Anspruch 1 oder 2, **dadurch gekennzeichnet, daß** das mit dem strömenden Medium in Berührung kommende Sensorteil (4) des Gehäuses (1) kegelstumpfförmig ausgeführt ist.

4. Wärmeübergangskontroll- und/oder -meßgerät nach Anspruch 1 oder 2, **dadurch gekennzeichnet, daß** das mit dem strömenden Medium in Berührung kommende Sensorteil des Gehäuses einen stufenartigen Absatz (7), vorzugsweise von etwa 0,2 bis 1 mm, insbesondere von etwa 0,5 mm, aufweist.

5. Wärmeübergangskontroll- und/oder -meßgerät nach einem der Ansprüche 1 bis 4, **dadurch gekennzeichnet, daß** das Heizelement (2) und/oder das Temperaturmeßelement (3) im Bereich der stiftförmigen Ausführung einen kreisförmigen Querschnitt aufweisen bzw. aufweist.

6. Wärmeübergangskontroll- und/oder -meßgerät nach einem der Ansprüche 1 bis 5, **dadurch gekennzeichnet, daß** das Heizelement (2) und/oder das Temperaturmeßelement (3) aus gut wärmeleitendem Material bestehen bzw. besteht, z. B. aus Kupfer, aus Silber oder aus einem gut wärmeleitenden keramischen Material.

7. Wärmeübergangskontroll- und/oder -meßgerät nach einem der Ansprüche 1 bis 6, **dadurch gekennzeichnet, daß** das Sensorteil (4) des Gehäuses (1) eine Stärke von ca. 0,2 bis 1,0 mm, vorzugsweise von ca. 0,5 mm, hat und vorzugsweise aus schlecht wärmeleitendem Material besteht, z. B. aus Kunststoff, insbesondere aus PEEK, aus Keramik oder aus schlecht wärmeleitendem Metall, wie z. B. V4A-Stahl.

8. Wärmeübergangskontroll- und/oder -meßgerät nach einem der Ansprüche 1 bis 7, **dadurch gekennzeichnet, daß** das Heizelement (2) und/oder das Temperaturmeßelement (3) mit radialem Abstand zum Sensorteil (4) des Gehäuses (1) in das Sensorteil (4) des Gehäuses (1) eingesetzt sind bzw. ist.

9. Wärmeübergangskontroll- und/oder -meßgerät nach einem der Ansprüche 1 bis 8, **dadurch gekennzeichnet, daß** das Heizelement (2) und das Temperaturmeßelement (3) druckfest und druckdicht in das Sensorteil (4) des Gehäuses (1) eingesetzt sind.

10. Wärmeübergangskontroll- und/oder -meßgerät nach einem der Ansprüche 1 bis 9, **dadurch gekennzeichnet, daß** die dem strömenden Medium zugewandten Stirnflächen des Heizelements (2) und/oder des Temperaturmeßelements (3) mit einer Deckschicht (6) versehen sind bzw. ist.

## Claims

1. Heat transmission monitoring and/or measuring apparatus, in particular flow monitor and/or measuring apparatus, for flowing media, with a housing (1), a heating element (2) and at least one temperature measuring element (3), the heating element (2) and the temperature measuring element (3) being integrated in a sensor part (4) of the housing (1) that comes into contact with the flowing medium, i.e. the heating element (2) and the at least one temperature measuring element (3) protruding into the sensor part (4) of the housing (1), and the parts which are integrated in the sensor part (4) of the housing (1) being configured in a pin-shaped manner, **characterized in that** the heating element (2) and the temperature measuring element (3) are inserted externally flush into the sensor part (4) of the housing (1), are inserted slightly set-back into the sensor part (4) of the housing (1) or protrude slightly into the flowing medium, that the heating element (2) and the temperature measuring element (3) have in the pin-shaped region a diameter of 0.5 to 1.5 mm and are inserted in the sensor part (4) at a radial distance from the sensor part (4) of the housing (1), so that an intermediate space (5) is created between the pin-shaped region of the heating element (2) and the pin-shaped region of the temperature measuring element (3) on the one hand and the sensor part (4) of the housing (1) on the other hand, the intermediate space (5) being provided with a material which has poor heat conduction.

2. Heat transmission monitoring and/or measuring apparatus according to Claim 1, **characterized in that** the heating element (2) and/or the temperature measuring element (3) are only partly formed in a pin-shaped manner, that is to say in each case only the part which is integrated in the sensor part (4) of the housing (1) is formed in a pin-shaped manner, and are otherwise formed in a flat-shaped manner.

3. Heat transmission monitoring and/or measuring apparatus according to Claim 1 or 2, **characterized in that** the sensor part (4) of the housing (1) coming into contact with the flowing medium is configured in a frustoconical manner.

4. Heat transmission monitoring and/or measuring apparatus according to Claim 1 or 2, **characterized in that** the sensor part of the housing coming into contact with the flowing medium has a step-like shoulder (7), preferably of approximately 0.2 to 1 mm, in particular of approximately 0.5 mm.

5. Heat transmission monitoring and/or measuring apparatus according to one of Claims 1 to 4, **characterized in that** the heating element (2) and/or the temperature measuring element (3) have and/or has a circular cross section in the region of the pin-shaped configuration.

6. Heat transmission monitoring and/or measuring apparatus according to one of Claims 1 to 5, **characterized in that** the heating element (2) and/or the temperature measuring element (3) consist or consists of material with good heat conduction, for example of copper, of silver or of ceramic material with good heat conduction.

7. Heat transmission monitoring and/or measuring apparatus according to one of Claims 1 to 6, **characterized in that** the sensor part (4) of the housing (1) has a thickness of about 0.2 to 1.0 mm, preferably of about 0.5 mm, and preferably consists of material with poor heat conduction, for example of plastic, in particular of PEEK, of ceramic or of metal with poor heat conduction, such as for example V4A steel.

8. Heat transmission monitoring and/or measuring apparatus according to one of Claims 1 to 7, **characterized in that** the heating element (2) and/or the temperature measuring element (3) are or is inserted into the sensor part (4) of the housing (1) at a radial distance from the sensor part (4) of the housing (1).

9. Heat transmission monitoring and/or measuring apparatus according to one of Claims 1 to 8, **characterized in that** the heating element (2) and the temperature measuring element (3) are inserted into the sensor part (4) of the housing (1) in a pressure-resistant and pressure-tight manner.

10. Heat transmission monitoring and/or measuring apparatus according to one of Claims 1 to 9, **characterized in that** the end faces of the heating element (2) and/or of the temperature measuring element (3) facing the flowing medium are or is provided with a covering layer (6).

## Revendications

1. Appareil de contrôle et/ou de mesure de transfert de chaleur, notamment appareil de surveillance d'écoulement et/ou appareil de mesure d'écoulement, pour fluides en mouvement, comprenant un boîtier (1), un élément chauffant (2) et au moins un élément de mesure de température (3), l'élément chauffant (2) et l'élément de mesure de température (3) étant intégrés dans une partie de capteur (4) du boîtier (1) venant en contact avec le fluide en mouvement, c'est-à-dire que l'élément chauffant (2) et l'au moins un élément de mesure de température (3) pénètrent dans la partie de capteur (4) du boîtier (1) et les pièces qui sont intégrées dans la partie de capteur (4) du boîtier (1) sont réalisées en forme de tiges,
**caractérisé en ce que**
l'élément chauffant (2) et l'élément de mesure de température (3) sont insérés en affleurement avec l'extérieur dans la partie de capteur (4) du boîtier (1), sont insérés légèrement en retrait dans la partie de capteur (4) du boîtier (1) ou pénètrent légèrement dans le fluide en mouvement, **en ce que** l'élément chauffant (2) et l'élément de mesure de température (3) présentent, dans la région en forme de tige, un diamètre de 0,5 à 1,5 mm et sont insérés à distance radiale par rapport à la partie de capteur (4) du boîtier (1) dans la partie de capteur (4), de sorte qu'un espace intermédiaire (5) soit réalisé entre la région en forme de tige de l'élément chauffant (2) et la région en forme de tige de l'élément de mesure de température (3) d'une part, et la partie de capteur (4) du boîtier (1) d'autre part, l'espace intermédiaire (5) étant pourvu d'un matériau mauvais conducteur de la chaleur.

2. Appareil de contrôle et/ou de mesure de transfert de chaleur selon la revendication 1, **caractérisé en ce que** l'élément chauffant (2) et/ou l'élément de mesure de température (3) sont réalisés seulement partiellement en forme de tige, c'est-à-dire que seulement la partie qui est intégrée dans la partie de capteur (4) du boîtier (1) est réalisée en forme de tige, et sont par ailleurs réalisés avec une forme plate.

3. Appareil de contrôle et/ou de mesure de transfert de chaleur selon la revendication 1 ou 2, **caractérisé en ce que** la partie de capteur (4) du boîtier (1) venant en contact avec le fluide en mouvement est réalisée avec une forme tronconique.

4. Appareil de contrôle et/ou de mesure de transfert de chaleur selon la revendication 1 ou 2, **caractérisé en ce que** la partie de capteur du boîtier venant en contact avec le fluide en mouvement présente un retrait en forme de gradin (7), de préférence d'environ 0,2 à 1 mm, notamment d' environ 0,5 mm.

5. Appareil de contrôle et/ou de mesure de transfert de chaleur selon l'une quelconque des revendications 1 à 4, **caractérisé en ce que** l'élément chauffant (2) et/ou l'élément de mesure de température (3) présentent ou présente une section transversale de forme circulaire dans la région de la réalisation en forme de tige.

6. Appareil de contrôle et/ou de mesure de transfert de chaleur selon l'une quelconque des revendications 1 à 5, **caractérisé en ce que** l'élément chauffant (2) et/ou l'élément de mesure de température (3) se composent ou se compose de matériau bon conducteur de la chaleur, par exemple de cuivre, d'argent ou d'un matériau céramique bon conducteur de la chaleur.

7. Appareil de contrôle et/ou de mesure de transfert de chaleur selon l'une quelconque des revendications 1 à 6, **caractérisé en ce que** la partie de capteur (4) du boîtier (1) présente une épaisseur d'environ 0,2 à 1,0 mm, de préférence d'environ 0,5 mm, et se compose de préférence de matériau mauvais conducteur de la chaleur, par exemple de plastique, notamment de PEEK, de céramique ou d'un métal mauvais conducteur de la chaleur, comme par exemple l'acier V4A.

8. Appareil de contrôle et/ou de mesure de transfert de chaleur selon l'une quelconque des revendications 1 à 7, **caractérisé en ce que** l'élément chauffant (2) et/ou l'élément de mesure de température (3) sont insérés ou est inséré à distance radiale de la partie de capteur (4) du boîtier (1) dans la partie de capteur (4) du boîtier (1).

9. Appareil de contrôle et/ou de mesure de transfert de chaleur selon l'une quelconque des revendications 1 à 8, **caractérisé en ce que** l'élément chauffant (2) et l'élément de mesure de température (3) sont insérés de manière résistant à la pression et étanche à la pression dans la partie de capteur (4) du boîtier (1).

10. Appareil de contrôle et/ou de mesure de transfert de chaleur selon l'une quelconque des revendications 1 à 9, **caractérisé en ce que** les faces frontales de l'élément chauffant (2) et/ou de l'élément de mesure de température (3) tournées vers le fluide en mouvement sont pourvues d'une couche de recouvrement (6).
